(19) **Europäisches Patentamt / European Patent Office / Office européen des brevets**

(11) **EP 3 578 726 B1**

(12) **EUROPEAN PATENT SPECIFICATION**

(45) Date of publication and mention
of the grant of the patent:
**13.12.2023 Bulletin 2023/50**

(21) Application number: **17895030.9**

(22) Date of filing: **27.12.2017**

(51) International Patent Classification (IPC):
***E04C 2/32*** *(2006.01)*     ***E04C 2/08*** *(2006.01)*
***E04D 3/30*** *(2006.01)*     ***E04D 3/35*** *(2006.01)*

(52) Cooperative Patent Classification (CPC):
**E04C 2/322; E04C 2/08; E04D 3/30; E04D 3/35**

(86) International application number:
**PCT/KR2017/015581**

(87) International publication number:
**WO 2018/143567 (09.08.2018 Gazette 2018/32)**

(54) **CORRUGATED STEEL SHEET HAVING INCLINED PORTION IN WHICH POSITION OF COUPLING HOLE IS ADJUSTED AND JOINT CORRUGATED STEEL SHEET STRUCTURE USING SAME**

STAHLWELLBLECH MIT GENEIGTEM TEIL MIT ANGEPASSTER POSITION DER KUPPLUNGSÖFFNUNG UND VERBINDUNGSSTAHLWELLBLECHSTRUKTUR DAMIT

TÔLE D'ACIER ONDULÉE AYANT UNE PARTIE INCLINÉE DANS LAQUELLE LA POSITION DU TROU DE COUPLAGE EST AJUSTÉE ET STRUCTURE DE TÔLE D'ACIER ONDULÉE COMMUNE UTILISANT CETTE DERNIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2017 KR 20170014478**

(43) Date of publication of application:
**11.12.2019 Bulletin 2019/50**

(73) Proprietors:
• **Chungamenc Co., Ltd.**
**Chungcheongbuk-do 27614 (KR)**
• **Daedotech Co., Ltd.**
**Pohang-si, Gyeongsangbuk-do 37526 (KR)**

(72) Inventors:
• **RHEE, Jong Wha**
**Seoul 08614 (KR)**
• **LEE, Jung Hyun**
**Seoul 08208 (KR)**

• **KIM, Moon Kyum**
**Seoul 05224 (KR)**
• **SHIN, Jun Hyum**
**Seoul 02449 (KR)**
• **LEE, Choon Woo**
**Suwon-si, Gyeonggi-do 16319 (KR)**
• **BAEK, Kyung Soo**
**Gyeongsan-si, Gyeongsangbuk-do 38681 (KR)**
• **GU, Ki Hyun**
**Daegu 41214 (KR)**

(74) Representative: **Rau, Schneck & Hübner Patentanwälte Rechtsanwälte PartGmbB Königstraße 2 90402 Nürnberg (DE)**

(56) References cited:
JP-A- 2002 161 608     KR-A- 20160 035 215
KR-B1- 100 761 333     KR-B1- 100 842 029
KR-B1- 101 620 096

**Description**

TECHNICAL FIELD

The present invention relates to the field of construction, and more particularly to a structure of a corrugated steel sheet.

BACKGROUND ART

Because a construction structure using a corrugated steel sheet has a light self-weight, has excellent construction efficiency, and requires a short construction period and low costs as compared with a concrete structure, studies on the application of the construction structure have been actively made.

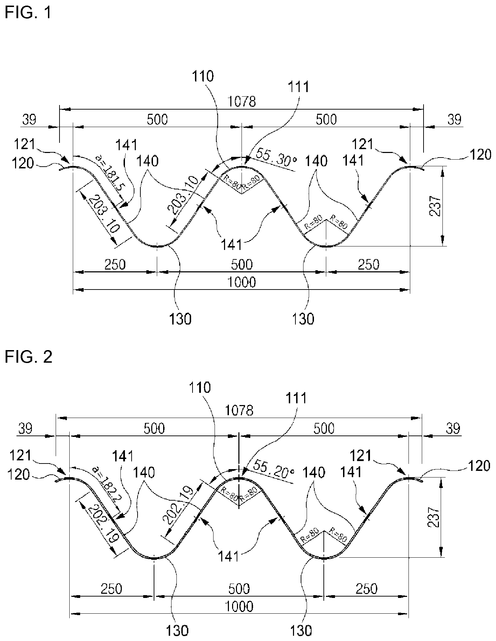

The conventional corrugated steel sheet includes: a W-shaped body 100 having one central ridge portion 110, two coupling ridge portions 120, two valley portions 130, and four inclined portions 140; coupling holes 111, 121, 131, and 141 formed in the one central ridge portion 110, the two coupling ridge portions 120, the two valley portions 130, and the four inclined portions 140 (FIGS. 1 to 7).

The international standards rule that the corrugated steel sheet in which a depth D of the body 100 is 237 mm, a pitch P of the body 100 is 1000 mm, and a radius R of curvature of the ridge portions 110 and 120 and the valley portions 130 is 80 mm.

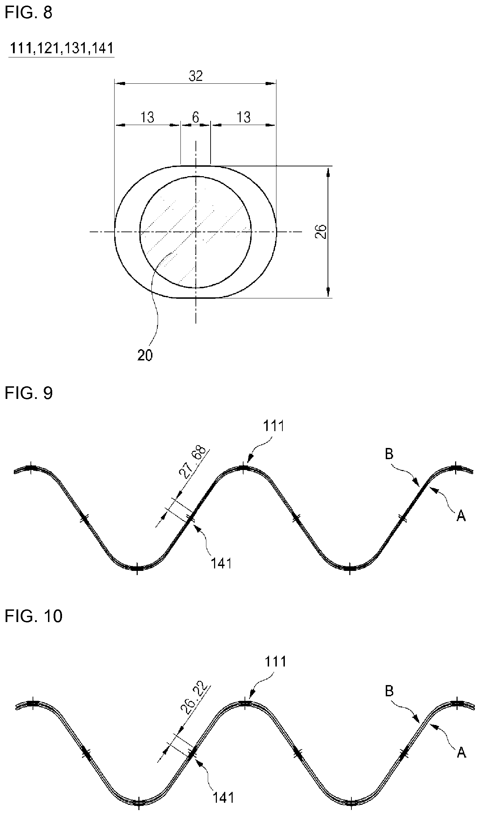

A slot structure in which a long diameter of the coupling holes for coupling of the bolts is 32 mm, and a short diameter of the coupling holes is 26 mm, is generally used (FIG. 8).

It is suitable to use bolts having a diameter of 22 mm in the coupling holes (4 mm is a marginal part for a coupling operation).

The thickness d or the corrugated steel sheet is 3 to 12 mm, and FIGS. 1 to 7 illustrate detailed sizes of the corrugated steel sheets having the thicknesses d of 3 mm (FIG. 1), 4 mm (FIG. 2), 5 mm (FIG. 3), 6 mm (FIG. 4), 7.01 mm (FIG. 5), 8 mm (FIG. 6), and 9 mm (FIG. 7).

Meanwhile, the corrugated steel sheet is manufactured to have a predetermined standard (size) in a factory, and it is necessary to assemble the corrugated steel sheet in the field and to form a reinforcing structure according to the design strength of the required structure as well.

FIGS. 9 to 15 illustrate a structure in which two corrugated steel sheets are superimposed on and coupled to each other to form the reinforcing structure.

In this way, when two corrugated steel sheets are superimposed on and coupling to each other, wide through-holes (through-holes formed through alignment of the coupling holes of the two corrugated steel sheets) are stably formed at portions at which the coupling holes 111 and 121 of the ridge portions and the coupling holes of the valley portions 131 of the two corrugated steel sheets meet each other, and thus there is no problem in commonly coupling the bolts.

However, since a wide through-hole (a through-hole formed through alignment of the coupling holes of the two corrugated steel sheets) is not formed at the portions at which the coupling holes 141 of the inclined portions of the two corrugated steel sheets meet each other, due to the influence of the thicknesses, and the radii of curvature of the ridge portions and the valley portions of the two corrugated steel sheets, it is difficult to commonly couple the bolts.

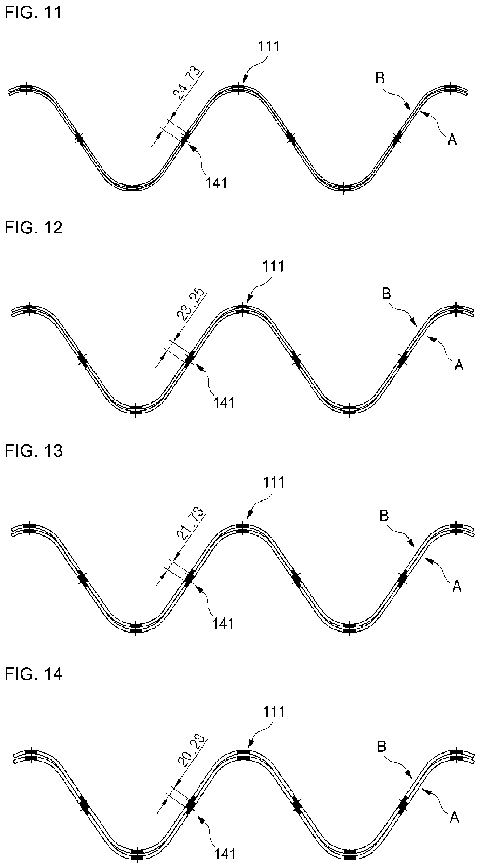

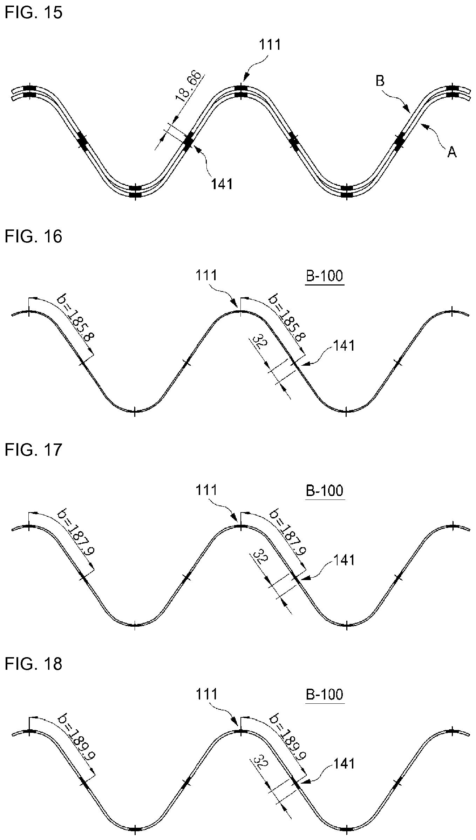

That is, in the corrugated steel sheet having a thickness d of 3 mm, the diameter of the through-hole is merely 27.68 mm (FIG. 9), in the corrugated steel sheet having a thickness d of 4 mm, the diameter of the through-hole is merely 26.22 mm (FIG. 10), in the corrugated steel sheet having a thickness d of 5 mm, the diameter of the through-hole is merely 24.73 mm (FIG. 11), in the corrugated steel sheet having a thickness d of 6 mm, the diameter of the through-hole is merely 23.25 mm (FIG. 12), in the corrugated steel sheet having a thickness d of 7.01 mm, the diameter of the through-hole is merely 21.73 mm (FIG. 13), in the corrugated steel sheet having a thickness d of 8 mm, the diameter of the through-hole is merely 20.23 mm (FIG. 14), and in the corrugated steel sheet having a thickness d of 9 mm, the diameter of the through-hole is merely 18.66 mm (FIG. 15).

Accordingly, the bolt of the above-mentioned standard (the diameter of 22 mm) cannot be coupled, and when a bolt of a smaller diameter is used, a stable coupling strength cannot be obtained, and when the size of the coupling holes is becomes lager, leakage of water through the marginal space becomes problematic.

The problem becomes more severe as the thickness of the corrugated steel sheets become larger. KR 100842029 B1 describes a corrugated steel sheet structure comprising the features of the preamble of claim 1.

DETAILED DESCRIPTION OF THE INVENTION

TECHNICAL PROBLEM

The present invention has been derived to solve the above-mentioned problems, and provides a corrugated steel sheet structure with a corrugated steel sheet having an inclined portion in which the position of a coupling hole is adjusted, which makes to possible to stably superimpose and couple corrugated steel sheets

TECHNICAL SOLUTION

In order to solve the above-mentioned problems, in accordance with an aspect of the present invention, there is provided a corrugated steel sheet structure, which is a pair of upper and lower corrugated steel sheets B and A, with a corrugated steel sheet B having an inclined portion in which a position of a coupling hole is adjusted, each of the upper and lower corrugated steel sheets B and A including: a W-shaped body 100 having one central ridge portion 110, two coupling ridge portions 120, two valley portions 130, and four inclined portions 140; and coupling holes 111, 121, 131, and 141 respectively formed in central sections of the one central ridge portion 110, the two coupling ridge portions 120, the two valley portions 130, and the four inclined portions 140, wherein the corrugated steel sheet B is superimposed on and coupled to the lower corrugated steel sheet A to form a corrugated steel sheet structure, wherein the thickness of the corrugated steel sheet B is the same as a thickness of the lower corrugated steel sheet A, bolts are commonly coupled to the coupling holes of the lower corrugated steel sheet A and the coupling holes of the corrugated steel sheet B, and when assuming that distances between centers of the coupling holes 111 of the central ridge portions and centers of the coupling holes 141 of the inclined portions are coupling hole distances a and b, the coupling hole distance b of the corrugated steel sheet B is calculated in Equation 1:

[Equation 1]
$$b = a + kd - 0.2$$

in which a: the coupling hole distance (mm) of the lower corrugated steel sheet A,
b: the coupling hole distance (mm) of the corrugated sheet sheet B,
k: 1.3 to 1.6, and
d: the thickness of the corrugated steel sheet.

The depth D of the body 100 is 237 mm, the pitch P of the body 100 is 1000 mm, and the radius R of curvature of the ridge portions 110 and 120 and the valley portions 130 is 80 mm.
It is preferable that the long diameter of the coupling holes is 32 mm, and the short diameter of the coupling holes is 26 mm.
It is preferable that the thickness d of the corrugated steel sheet is 3 to 12 mm.
It is preferable that when the thickness d of the corrugated steel sheet is 3 mm, the coupling hole distance a of the lower corrugated steel sheet A is 181.5 mm and the coupling hole distance b of the corrugated steel sheet B is 185.8 mm, when the thickness d of the corrugated steel sheet is 4 mm, the coupling hole distance a of the lower corrugated steel sheet A is 182.2 mm and the coupling hole distance b of the corrugated steel sheet B is 187.9 mm, when the thickness d of the corrugated steel sheet is 5 mm, the coupling hole distance a of the lower corrugated steel sheet A is 182.6 mm and the coupling hole distance b of the corrugated steel sheet B is 189.9 mm, when the thickness d of the corrugated steel sheet is 6 mm, the coupling hole distance a of the lower corrugated steel sheet A is 183.3 mm and the coupling hole distance b of the corrugated steel sheet B is 192.0 mm, when the thickness d of the corrugated steel sheet is 7.01 mm, the coupling hole distance a of the lower corrugated steel sheet A is 183.9 mm and the coupling hole distance b of the corrugated steel sheet B is 194.2 mm, when the thickness d of the corrugated steel sheet is 8 mm, the coupling hole distance a of the lower corrugated steel sheet A is 184.5 mm and the coupling hole distance b of the corrugated steel sheet B is 196.3 mm, when the thickness d of the corrugated steel sheet is 9 mm, the coupling hole distance a of the lower corrugated steel sheet A is 184.9 mm and the coupling hole distance b of the corrugated steel sheet B is 198.2 mm, when the thickness d of the corrugated steel sheet is 10 mm, the coupling hole distance a of the lower corrugated steel sheet A is 185.6 mm and the coupling hole distance b of the corrugated steel sheet B is 200.5 mm, when the thickness d of the corrugated steel sheet is 11 mm, the coupling hole distance a of the lower corrugated steel sheet A is 186.2 mm and the coupling hole distance b of the corrugated steel sheet B is 202.6 mm, and when the thickness d of the corrugated steel sheet is 12 mm, the coupling hole distance a of the lower corrugated steel sheet A is 186.8 mm and the coupling hole distance b of the corrugated steel sheet B is 204.8 mm.
In accordance with another aspect of the present invention, there is provided a corrugated steel sheet structure including: the corrugated steel sheet B claimed in any one of claims 1 to 5; the lower corrugated steel sheet A superimposed on and coupled to a lower portion of the corrugated steel sheet B; and bolts of a diameter of 22 mm commonly coupled to the coupling holes of the lower corrugated steel sheet A and the coupling holes of the corrugated sheet sheet B.

ADVANTAGEOUS EFFECTS OF THE INVENTION

The present invention suggests a corrugated steel sheet having an inclined portion in which the position of a coupling hole is adjusted, by which a stable bolt coupling strength can be obtained, waterproof performance can be improved by minimizing a space between the superimposing and coupling structure of the corrugated steel sheets, and a field construction efficiency can be improved by making a bolt coupling operation easy.

DESCRIPTION OF THE DRAWINGS

FIGS. 1 to 7 are cross-sectional views of a conventional corrugated steel sheet.
FIG. 8 is a cross-sectional view of a coupling hole.
FIGS. 9 to 15 are cross-sectional views of a coupling structure of the conventional corrugated steel sheet.

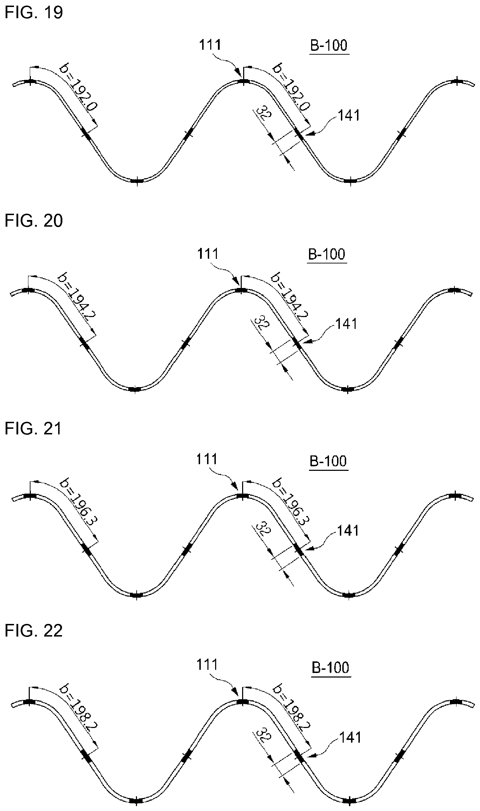

FIGS. 16 to 32 illustrates an embodiment of the present invention, in which:
FIGS. 16 to 22 are cross-sectional views of a corrugated steel sheet; and

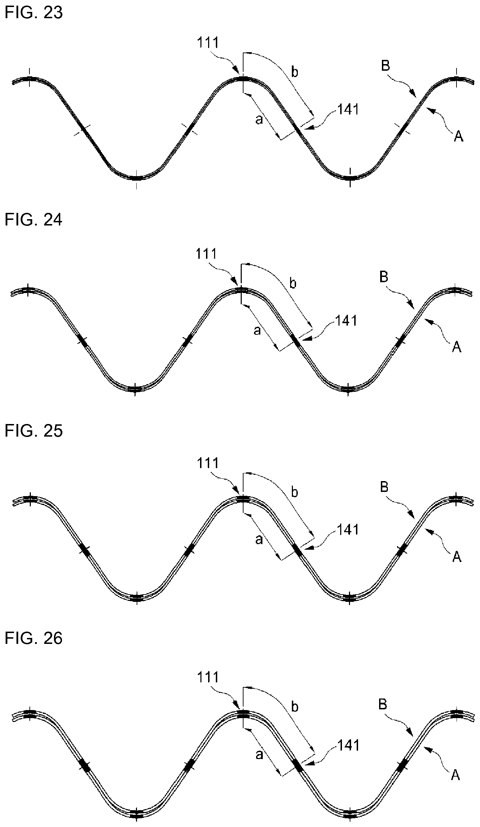

FIGS. 23 to 32 are cross-sectional views of a coupling structure of the corrugated steel sheet.

*** Description of reference numerals ***

100: body 110: Central ridge portion
111: central hole 120: coupling ridge portion
121: coupling hole 130: valley portion
131: coupling hole 140: inclined portion
141: coupling hole A: lower corrugate steel sheet
a: coupling hole distance of lower corrugated steel sheet B: corrugated steel sheet
b: coupling hole distance of corrugated steel sheet
d: thickness of corrugated steel sheet

BEST MODE

Hereinafter, exemplary embodiments of the present disclosure will be described in detail with reference to the accompanying drawings.

As illustrated in the drawings starting from FIG. 1, the present invention relates to a corrugated steel sheet B having an inclined portion in which a position of a coupling hole is adjusted, which is one of a pair of upper and lower corrugated steel sheets B and A, each of the upper and lower corrugated steel sheets B and A including: a W-shaped body 100 having one central ridge portion 110, two coupling ridge portions 120, two valley portions 130, and four inclined portions 140; and coupling holes 111, 121, 131, and 141 formed in central sections of the one central ridge portion 110, the two coupling ridge portions 120, the two valley portions 130, and the four inclined portions 140.

Among the pair of corrugated steel sheets A and B, the corrugated steel sheet B is superimposed on and coupled to the lower corrugated steel sheet A, the thickness of the corrugated steel sheet B is the same as the thickness of the lower corrugated steel sheet A, and bolts are commonly coupled to the coupling holes of the lower corrugated steel sheet A and the coupling holes of the corrugated steel sheet B.

Here, when assuming that distances between the centers of the coupling holes 111 of the central ridge portions and the centers of the coupling holes 141 of the inclined portions are coupling hole distances a and b, the coupling hole distance b of the corrugated steel sheet B is calculated in Equation 1.

[Equation 1]

$$b = a + kd - 0.2$$

a: the coupling hole distance (mm) of the lower corrugated steel sheet (A)

, b: the coupling hole distance (mm) of the corrugated sheet sheet (B)

, k: 1.3 to 1.6

d: the thickness of the corrugated steel sheet

That is, there is a problem of not being able to form a wide through-hole (a through-hole formed through alignment of the coupling holes of the two corrugated steel sheets) at a section in which the coupling hole 141 of the inclined portion of the lower corrugated steel sheet A and the coupling hole 141 of the inclined portion of the corrugated steel sheet B meet each other due to the influences of the thicknesses of the two corrugated steel sheets and the radii of curvature of the the ridge portions and the valley portions, and the problem is solved by changing the locations of the coupling hole 141 of the corrugated steel sheet B.

According to Equation 1, because the position of the coupling hole 141 of the inclined portion of the lower corrugated steel sheet A is determined while taking the distance increased from the coupling hole distance a of the lower corrugated steel sheet A by a product of the thickness d of the corrugated steel sheet and the constant k, as the coupling hole distance b of the corrugated steel sheet B, the widths of the coupling holes formed as the coupling holes 141 of the inclined portions of the two corrugated steel sheets A and B meet each other can be sufficiently ensured, making it possible to couple the bolts 20 (having a diameter of 22 mm) stably.

Because Equation 1 is obtained with the premise of a corrugated steel sheet of the international standards, a stable effect can be expected according to the international standards.

That is, it is preferable that this is applied to the corrugated steel sheet in which the depth D of the body 100 is 237 mm, the pitch P of the body 100 is 1000 mm, and the radius R of curvature of the ridge portions 110 and 120 and the valley portions 130 is 80 mm.

Further, it is preferable that the present invention is applied to the corrugated steel sheet which has coupling holes of a slot structure having a long diameter of 32 mm and a short diameter of 26 mm.

It is suitable to use bolts having a diameter of 22 mm in the coupling holes (4 mm is a marginal part for a coupling operation).

Hereinafter, in order to identify the effects of the present invention, an embodiment to which the present invention is applied for a corrugated steel sheet having a thickness d of 3 to 12 mm will be described.

It could be identified that when the thickness d of the corrugated steel sheet is 3 mm, the coupling hole distance a of the lower corrugated steel sheet A is 181.5 mm, the coupling hole distance b of the corrugated steel sheet B is 185.8 mm, and stable through-holes for bolting are formed as the coupling holes 141 of the inclined portions of the two corrugated steel sheets meet each other (FIGS. 1, 16, and 23).

It could be identified that when the thickness d of the corrugated steel sheet is 4 mm, the coupling hole distance a of the lower corrugated steel sheet A is 182.2 mm, the coupling hole distance b of the corrugated steel sheet B is 187.9 mm, and stable through-holes for bolting are formed as the coupling holes 141 of the inclined portions of the two corrugated steel sheets meet each other (FIGS. 2, 17, and 24).

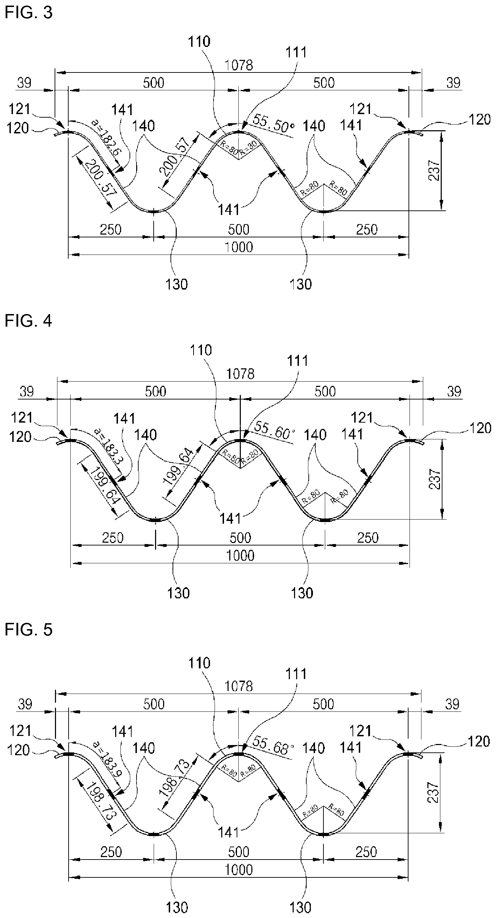

It could be identified that when the thickness d of the corrugated steel sheet is 5 mm, the coupling hole distance a of the lower corrugated steel sheet A is 182.6 mm, the coupling hole distance b of the corrugated steel sheet B is 189.9 mm, and stable through-holes for bolting are formed as the coupling holes 141 of the inclined portions of the two corrugated steel sheets meet each other (FIGS. 3, 18, and 25).

It could be identified that when the thickness d of the corrugated steel sheet is 6 mm, the coupling hole distance a of the lower corrugated steel sheet A is 183.3 mm, the coupling hole distance b of the corrugated steel sheet B is 192.0 mm, and stable through-holes for bolting are formed as the coupling holes 141 of the inclined portions of the two corrugated steel sheets meet each other (FIGS. 4, 19, and 26).

It could be identified that when the thickness d of the corrugated steel sheet is 7.01 mm, the coupling hole distance a of the lower corrugated steel sheet A is 183.9 mm, the coupling hole distance b of the corrugated steel sheet B is 194.2 mm, and stable through-holes for bolting are formed as the coupling holes 141 of the inclined portions of the two corrugated steel sheets meet each other (FIGS. 5, 20, and 27).

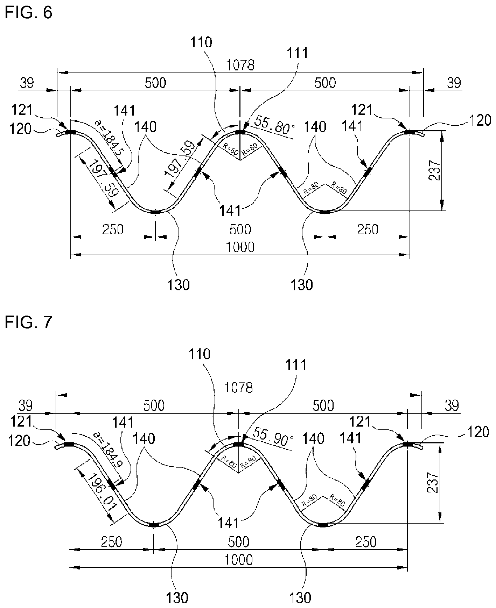

It could be identified that when the thickness d of the corrugated steel sheet is 8 mm, the coupling hole distance a of the lower corrugated steel sheet A is 184.5 mm, the coupling hole distance b of the corrugated steel sheet B is 196.3 mm, and stable through-holes for bolting are formed as the coupling holes 141 of the inclined portions of the two corrugated steel sheets meet each other (FIGS. 6, 21, and 28).

It could be identified that when the thickness d of the corrugated steel sheet is 9 mm, the coupling hole distance a of the lower corrugated steel sheet A is 184.9 mm, the coupling hole distance b of the corrugated steel sheet B is 198.2 mm, and stable through-holes for bolting are formed as the coupling holes 141 of the inclined portions of the two corrugated steel sheets meet each other (FIGS. 7, 22, and 29).

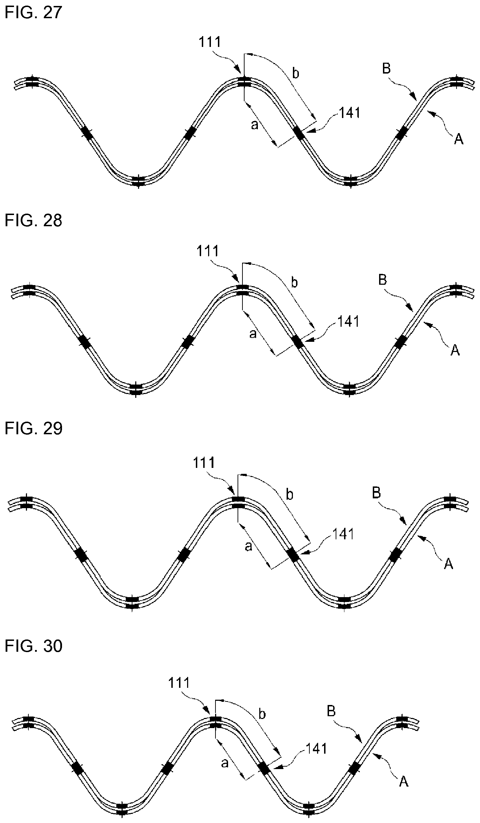

It could be identified that when the thickness d of the corrugated steel sheet is 10 mm, the coupling hole distance a of the lower corrugated steel sheet A is 185.6 mm, the coupling hole distance b of the corrugated steel sheet B is 200.5 mm, and stable through-holes for bolting are formed as the coupling holes 141 of the inclined portions of the two corrugated steel sheets meet each other (FIG. 30).

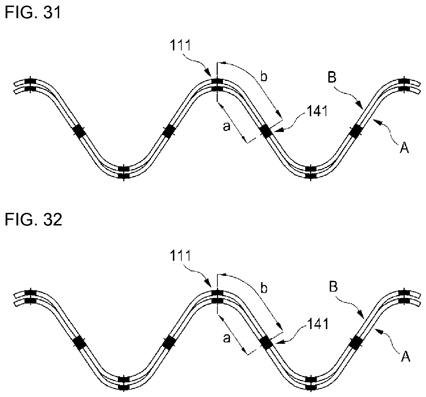

It could be identified that when the thickness d of the corrugated steel sheet is 11 mm, the coupling hole distance a of the lower corrugated steel sheet A is 186.2 mm, the coupling hole distance b of the corrugated steel sheet B is 202.6 mm, and stable through-holes for bolting are formed as the coupling holes 141 of the inclined portions of the two corrugated steel sheets meet each other (FIG. 31).

It could be identified that when the thickness d of the corrugated steel sheet is 12 mm, the coupling hole distance a of the lower corrugated steel sheet A is 186.8 mm, the coupling hole distance b of the corrugated steel sheet B is 204.8 mm, and stable through-holes for bolting are formed as the coupling holes 141 of the inclined portions of the two corrugated steel sheets meet each other (FIG. 32).

Since the above description is merely a description of some of the preferred embodiments which may be realized by the present invention, the scope of the present invention should not be construed to be limited to the above embodiment as known and the technical spirit of the present invention, which has been described above, and the technical spirit having the common basic concept as that of the present invention will fall within the scope of the present invention.

## Claims

1. A corrugated steel sheet structure, which is a pair of upper and lower corrugated steel sheets (B, A), wherein one of the corrugated steel sheets (B, A) has an inclined portion in which a position of a coupling hole is adjusted, each of the upper and lower corrugated steel sheets (B, A) including:

    a W-shaped body (100) having one central ridge portion (110), two coupling ridge portions (120), two valley portions (130), and four inclined portions (140); and
    coupling holes (111, 121, 131, and 141) respectively formed in central sections of the one central ridge portion (110), the two coupling ridge portions (120), the two valley portions (130), and the four inclined portions (140),
    wherein the corrugated steel sheet (B) is superimposed on and coupled to the lower corrugated steel sheet (A) to form the corrugated steel sheet structure,
    wherein the thickness of the corrugated steel sheet (B) is the same as a thickness of the lower corrugated steel sheet (A),
    bolts are commonly coupled to the coupling holes of the lower corrugated steel sheet (A) and the coupling holes of the corrugated steel sheet (B),
    **characterised in that**
    when assuming that distances between centers of the coupling holes (111) of the central ridge portions and centers of the coupling holes (141) of the inclined portions are coupling hole distances (a, b), the coupling hole distance (b) of the corrugated steel sheet (B) is calculated in Equation 1:

[Equation 1]

$$b = a + kd - 0.2$$

in which a: the coupling hole distance (mm) of the lower corrugated steel sheet (A), b: the coupling hole distance (mm) of the corrugated steel sheet (B), k: 1.3 to 1.6, and d: the thickness of the corrugated steel sheet (mm), wherein a depth (D) of the body (100) is 237 mm, a pitch (P) of the body (100) is 1000 mm, and a radius (R) of curvature of the ridge portions (110,. 120) and the valley portions (130) is 80 mm.

2. The corrugated steel sheet structure of claim 1, wherein a long diameter of the coupling holes is 32 mm, and a short diameter of the coupling holes is 26 mm.

3. The corrugated steel sheet structure of claim 2, wherein the thickness (d) of the corrugated steel sheet is 3 to 12 mm.

4. The corrugated steel sheet structure of claim 3, wherein when the thickness (d) of the corrugated steel sheet is 3 mm, the coupling hole distance (a) of the lower corrugated steel sheet (A) is 181.5 mm and the coupling hole distance (b) of the corrugated steel sheet (B) is 185.8 mm,

when the thickness (d) of the corrugated steel sheet is 4 mm, the coupling hole distance (a) of the lower corrugated steel sheet (A) is 182.2 mm and the coupling hole distance (b) of the corrugated steel sheet (B) is 187.9 mm, when the thickness (d) of the corrugated steel sheet is 5 mm, the coupling hole distance (a) of the lower corrugated steel sheet (A) is 182.6 mm and the coupling hole distance (b) of the corrugated steel sheet (B) is 189.9 mm, when the thickness (d) of the corrugated steel sheet is 6 mm, the coupling hole distance (a) of the lower corrugated steel sheet (A) is 183.3 mm and the coupling hole distance (b) of the corrugated steel sheet (B) is 192.0 mm, when the thickness (d) of the corrugated steel sheet is 7.01 mm, the coupling hole distance (a) of the lower corrugated steel sheet (A) is 183.9 mm and the coupling hole distance (b) of the corrugated steel sheet (B) is 194.2 mm,

when the thickness (d) of the corrugated steel sheet is 8 mm, the coupling hole distance (a) of the lower corrugated steel sheet (A) is 184.5 mm and the coupling hole distance (b) of the corrugated steel sheet (B) is 196.3 mm, when the thickness (d) of the corrugated steel sheet is 9 mm, the coupling hole distance (a) of the lower corrugated steel sheet (A) is 184.9 mm and the coupling hole distance (b) of the corrugated steel sheet (B) is 198.2 mm, when the thickness (d) of the corrugated steel sheet is 10 mm, the coupling hole distance (a) of the lower corrugated steel sheet (A) is 185.6 mm and the coupling hole distance (b) of the corrugated steel sheet (B) is 200.5 mm, when the thickness (d) of the corrugated steel sheet is 11 mm, the coupling hole distance (a) of the lower corrugated steel sheet (A) is 186.2 mm and the coupling hole distance (b) of the corrugated steel sheet (B) is 202.6 mm, and when the thickness (d) of the corrugated steel sheet is 12 mm, the coupling hole distance (a) of the lower corrugated steel sheet (A) is 186.8 mm and the coupling hole distance (b) of the corrugated steel sheet (B) is 204.8 mm.

5. The corrugated steel sheet structure of any one of claims 1 and 3 to 4, comprising bolts of a diameter of 22 mm commonly coupled to the coupling holes of the lower corrugated steel sheet (A) and the coupling holes of the corrugated sheet sheet (B).

**Patentansprüche**

1. Stahlwellblechstruktur, welche ein Paar von oberen und unteren Stahlwellblechen (B, A) umfasst, wobei eines der Stahlwellbleche (B, A) einen geneigten Abschnitt aufweist, in welchem eine Position eines Kopplungslochs eingestellt ist, wobei jedes der oberen und unteren Stahlwellbleche (B, A) folgendes umfasst:

- einen W-förmigen Körper (100) mit einem zentralen Kammabschnitt (110), zwei Kopplungskammabschnitten (120), zwei Talabschnitten (130) und vier geneigten Abschnitten (140); und
- Kopplungslöcher (111, 121, 131 und 141), welche jeweils in zentralen Teilen des einen zentralen Kammabschnitts (110), der beiden Kopplungskammabschnitte (120), der beiden Talabschnitte (130) und der vier geneigten Abschnitte (140) ausgebildet sind, wobei das Stahlwellblech (B) über das untere Stahlwellblech (A) gelegt und mit diesem verbunden wird, um die Stahlwellblechstruktur zu bilden, wobei die Dicke des Stahlwellblechs (B) die gleiche ist wie die Dicke des unteren Stahlwellblechs (A),

Schrauben sowohl mit den Kopplungslöchern des unteren Stahlwellblechs (A) als auch mit den Kopplungslöchern des Stahlwellblechs (B) verbunden werden,

**dadurch gekennzeichnet, dass**

unter der Annahme, dass die Abstände zwischen den Mittelpunkten der Kopplungslöcher (111) der zentralen Kammabschnitte und den Mittelpunkten der Kopplungslöcher (141) der geneigten Abschnitte Kopplungslochabstände (a, b) sind, der Kopplungslochabstand (b) des Stahlwellblechs (B) in Gleichung 1 wie folgt berechnet wird:

[Gleichung 1]

$$b = a + kd\text{-}0.2$$

wobei a: der Kopplungslochabstand (mm) des unteren Stahlwellblechs (A), b: der Kopplungslochabstand (mm) des Stahlwellblechs (B), k: 1,3 bis 1,6, und d: die Dicke des Stahlwellblechs (mm) darstellen,

wobei eine Tiefe (D) des Körpers (100) 237 mm, eine Spannweite (P) des Körpers (100) 1.000 mm und ein Krümmungsradius (R) der Kammabschnitte (110, 120) und der Talabschnitte (130) 80 mm beträgt.

2. Stahlwellblechstruktur nach Anspruch 1, wobei ein langer Durchmesser der Kopplungslöcher 32 mm und ein kurzer Durchmesser der Kopplungslöcher 26 mm beträgt.

3. Stahlwellblechstruktur nach Anspruch 2, wobei die Dicke (d) des Stahlwellblechs 3 bis 12 mm beträgt.

4. Stahlwellblechstruktur nach Anspruch 3, wobei, wenn die Dicke (d) des Stahlwellblechs 3 mm beträgt, der Kopplungslochabstand (a) des unteren Stahlwellblechs (A) 181,5 mm und der Kopplungslochabstand (b) des Stahlwellblechs (B) 185,8 mm beträgt,

wenn die Dicke (d) des Stahlwellblechs 4 mm beträgt, der Kopplungslochabstand (a) des unteren Stahlwellblechs (A) 182,2 mm und der Kopplungslochabstand (b) des Stahlwellblechs (B) 187,9 mm beträgt, wenn die Dicke (d) des Stahlwellblechs 5 mm beträgt, der Kopplungslochabstand (a) des unteren Stahlwellblechs (A) 182,6 mm und der Kopplungslochabstand (b) des Stahlwellblechs (B) 189,9 mm beträgt, wenn die Dicke (d) des Stahlwellblechs 6 mm beträgt, der Kopplungslochabstand (a) des unteren Stahlwellblechs (A) 183,3 mm und der Kopplungslochabstand (b) des Stahlwellblechs (B) 192,0 mm beträgt, wenn die Dicke (d) des Stahlwellblechs 7,01 mm beträgt, der Kopplungslochabstand (a) des unteren Stahlwellblechs (A) 183,9 mm und der Kopplungslochabstand (b) des Stahlwellblechs (B) 194,2 mm beträgt,

wenn die Dicke (d) des Stahlwellblechs 8 mm beträgt, der Kopplungslochabstand (a) des unteren Stahlwellblechs (A) 184,5 mm und der Kopplungslochabstand (b) des gewellten Stahlwellblechs (B) 196,3 mm beträgt,

wenn die Dicke (d) des Stahlwellblechs 9 mm beträgt, der Kopplungslochabstand (a) des unteren Stahlwellblechs (A) 184,9 mm und der Kopplungslochabstand (b) des Stahlwellblechs (B) 198,2 mm beträgt, wenn die Dicke (d) des Stahlwellblechs 10 mm beträgt, der Kopplungslochabstand (a) des unteren Stahlwellblechs (A) 185,6 mm und der Kopplungslochabstand (b) des Stahlwellblechs (B) 200,5 mm beträgt,

wenn die Dicke (d) des Stahlwellblechs 11 mm beträgt, der Kopplungslochabstand (a) des unteren Stahlwellblechs (A) 186,2 mm und der Kopplungslochabstand (b) des Stahlwellblechs (B) 202,6 mm beträgt, und

wenn die Dicke (d) des Stahlwellblechs 12 mm beträgt, der Kopplungslochabstand (a) des unteren Stahlwellblechs (A) 186,8 mm und der Kopplungslochabstand (b) des Stahlwellblechs (B) 204,8 mm beträgt.

5. Stahlwellblechstruktur nach einem der Ansprüche 1 und 3 bis 4, mit Schrauben mit einem Durchmesser von 22 mm, welche sowohl mit den Kopplungslöchern des unteren Stahlwellblechs (A) als auch mit den Kopplungslöchern des Stahlwellblechs (B) verbunden werden.

**Revendications**

1. Structure en tôle d'acier ondulée, comprenant une paire de tôles d'acier ondulées supérieure et inférieure (B, A), dans laquelle l'une des tôles d'acier ondulées (B, A) présente une partie inclinée dans laquelle la position d'un trou de couplage est ajustée, chacune des tôles d'acier ondulées supérieure et inférieure (B, A) comprenant :

- un corps en forme de W (100) ayant une partie centrale de crête (110), deux parties de crête de couplage (120), deux parties de vallée (130), et quatre parties inclinées (140) ; et
- des trous de couplage (111, 121, 131 et 141) formés respectivement dans les sections centrales de la partie centrale de crête (110), des deux parties de crête de couplage (120), des deux parties de vallée (130) et des quatre parties inclinées (140),

dans laquelle la tôle d'acier ondulée (B) est superposée et couplée à la tôle d'acier ondulée inférieure (A) pour former la structure en tôle d'acier ondulée,

dans laquelle l'épaisseur de la tôle d'acier ondulée (B) est la même que l'épaisseur de la tôle d'acier ondulée inférieure (A),

des boulons sont couplés conjointement aux trous de couplage de la tôle d'acier ondulée inférieure (A) et aux trous de couplage de la tôle d'acier ondulée (B),

**caractérisée en ce qu'**

en supposant que les distances entre les centres des trous de couplage (111) des parties centrales de crête et les centres des trous de couplage (141) des parties inclinées sont des distances de trous de couplage (a, b), la distance de trous de couplage (b) de la tôle d'acier ondulée (B) est calculée dans l'équation 1 :

[Equation 1]

$$b = a + kd - 0.2$$

dans laquelle a : la distance entre les trous de couplage (mm) de la tôle d'acier ondulée inférieure (A), b : la distance entre les trous de couplage (mm) de la tôle d'acier ondulée (B), k : 1,3 à 1,6, et d : l'épaisseur de la tôle d'acier ondulée (mm),

dans lequel la profondeur (D) du corps (100) est de 237 mm, le pas (P) du corps (100) est de 1 000 mm et le rayon de courbure (R) des parties de crête (110, 120) et des parties de vallée (130) est de 80 mm.

2. Structure en tôle d'acier ondulée de la revendication 1, dans laquelle un diamètre long des trous de couplage est de 32 mm et un diamètre court des trous de couplage est de 26 mm.

3. Structure en tôle d'acier ondulée de la revendication 2, dans laquelle l'épaisseur (d) de la tôle d'acier ondulée est comprise entre 3 et 12 mm.

4. Structure en tôle d'acier ondulée de la revendication 3, dans laquelle, lorsque l'épaisseur (d) de la tôle d'acier ondulée est de 3 mm, la distance du trou de couplage (a) de la tôle d'acier ondulée inférieure (A) est de 181,5 mm et la distance du trou de couplage (b) de la tôle d'acier ondulée (B) est de 185,8 mm,

lorsque l'épaisseur (d) de la tôle d'acier ondulée est de 4 mm, la distance du trou de couplage (a) de la tôle d'acier ondulée inférieure (A) est de 182,2 mm et la distance du trou de couplage (b) de la tôle d'acier ondulée (B) est de 187,9 mm,

lorsque l'épaisseur (d) de la tôle d'acier ondulée est de 5 mm, la distance du trou de couplage (a) de la tôle d'acier ondulée inférieure (A) est de 182,6 mm et la distance du trou de couplage (b) de la tôle d'acier ondulée (B) est de 189,9 mm,

lorsque l'épaisseur (d) de la tôle d'acier ondulée est de 6 mm, la distance du trou de couplage (a) de la tôle d'acier ondulée inférieure (A) est de 183,3 mm et la distance du trou de couplage (b) de la tôle d'acier ondulée (B) est de 192,0 mm,

lorsque l'épaisseur (d) de la tôle d'acier ondulée est de 7,01 mm, la distance du trou de couplage (a) de la tôle d'acier ondulée inférieure (A) est de 183,9 mm et la distance du trou de couplage (b) de la tôle d'acier ondulée (B) est de 194,2 mm,

lorsque l'épaisseur (d) de la tôle d'acier ondulée est de 8 mm, la distance du trou de couplage (a) de la tôle d'acier ondulée inférieure (A) est de 184,5 mm et la distance du trou de couplage (b) de la tôle d'acier ondulée (B) est de 196,3 mm,

lorsque l'épaisseur (d) de la tôle d'acier ondulée est de 9 mm, la distance du trou de couplage (a) de la tôle d'acier ondulée inférieure (A) est de 184,9 mm et la distance du trou de couplage (b) de la tôle d'acier ondulée (B) est de 198,2 mm,

lorsque l'épaisseur (d) de la tôle d'acier ondulée est de 10 mm, la distance du trou de couplage (a) de la tôle d'acier ondulée inférieure (A) est de 185,6 mm et la distance du trou de couplage (b) de la tôle d'acier ondulée (B) est de 200,5 mm,

lorsque l'épaisseur (d) de la tôle d'acier ondulée est de 11 mm, la distance du trou de couplage (a) de la tôle d'acier ondulée inférieure (A) est de 186,2 mm et la distance du trou de couplage (b) de la tôle d'acier ondulée (B) est de 202,6 mm, et

lorsque l'épaisseur (d) de la tôle d'acier ondulée est de 12 mm, la distance du trou de couplage (a) de la tôle d'acier ondulée inférieure (A) est de 186,8 mm et la distance du trou de couplage (b) de la tôle d'acier ondulée (B) est de 204,8 mm.

5. Structure en tôle d'acier ondulée de l'une quelconque des revendications 1 et 3 à 4, comprenant des boulons d'un diamètre de 22 mm couplés conjointement aux trous de couplage de la tôle d'acier ondulée inférieure (A) et aux trous de couplage de la tôle d'acier ondulée (B).

FIG. 1

FIG. 2

FIG. 3

FIG. 4

FIG. 5

FIG. 6

FIG. 7

FIG. 8

111,121,131,141

FIG. 9

FIG. 10

FIG. 11

FIG. 12

FIG. 13

FIG. 14

FIG. 15

111

18.66

B

A

141

FIG. 16

111

B-100

b=185.8

b=185.8

32

141

FIG. 17

111

B-100

b=187.9

b=187.9

32

141

FIG. 18

111

B-100

b=189.9

b=189.9

32

141

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100842029 B1